# EUROPEAN PATENT APPLICATION

(11) **EP 1 946 643 A1**
(43) Date of publication of application: **23.07.2008**
(21) Application number: 07115771.3
(22) Date of filing: 05.09.2007
(51) Int. Cl.: A23C 7/04, A23C 9/14, A23C 9/142, A23C 9/144, A23C 9/146, A23C 9/15, A23C 19/076, A23C 19/09, A23C 23/00, A23G 1/00, A23L 3/3454

(54) **Food ingredients with reduced sourness at low pH**

(30) Priority: 15.12.2006 US 611479
(71) Applicant: KRAFT FOODS HOLDINGS, INC., Northfield, Illinois 60093 (US)
(72) Inventor: Loh, Jimbay Peter, Green Oaks, IL 60048 (US); Hong, Yeong-Ching Albert, Kildeer, IL 60047 (US); Cha, Alice Shen, Northbrook, IL 60062 (US)
(74) Representative: Smaggasgale, Gillian Helen

(57) **Abstract**

Described herein are organic acid reduced food ingredients and methods of making organic acid reduced food ingredients having a less sour taste and better organoleptic properties at low pH than conventional food ingredients with higher total organic acid content. Reduced sourness of the food ingredients of the present invention may be achieved by subjecting the food ingredients to organic acid/organic acid salt reduction methods.

## Description

### FIELD OF THE INVENTION

The present invention is directed to organic acid reduced food ingredients and methods of making organic acid reduced food ingredients having a less sour taste and better organoleptic properties at low pH than conventional food ingredients with higher total organic acid content. Reduced sourness of the food ingredients of the present invention may be achieved by subjecting the food ingredients to organic acid/organic acid salt reduction methods.

### BACKGROUND OF THE INVENTION

Food processors have long felt the need for methods to prolong the shelf life of foodstuffs. By increasing the amount of time a foodstuff is stable, processors can mitigate inventory loses due to spoiled foodstuffs. Prior methods including the use of special packaging, preservatives, and/or specific storage parameters (e.g., refrigeration) have been used to stave off spoilage. These methods are generally expensive and, therefore, increase the cost of storing and producing the foodstuff.

Particularly in the case of dairy products, low cost, high quality dairy products are largely unavailable in shelf stable form. Expensive processes such as retort treatment or aseptic packaging have been used to prepare shelf stable dairy products; however, these processes tend to be expensive. Other approaches have also been tried, including the use of acidification with one or more edible inorganic acids (e.g., food grade hydrochloric acid) to provide shelf stable dairy products with reduced sour taste (see, e.g., U.S. Patent Publications 2005/0186312, 2005/0220969, 2006/003499, and 2006/0034994), Unfortunately, the use of food grade inorganic acids alone in low pH food products is not always adequate in mitigating the undesirable sour taste due to the fact that many food ingredients (e.g., milk, milk powder, cheese, cocoa, and the like) contain high level of organic acids (e.g. lactic acid) and/or metal salts of organic acids (e.g. calcium citrate).

Thus, many prior methods have sacrificed taste and quality of the food for increased shelf life. As such there is still a need for a cost effective means of food preservation that does not negatively affect the organoleptic properties of the food product. In addition, there is a need for improved ingredients that will allow the formulation of high quality, low pH food products with sufficiently reduced content of organic acids.

### SUMMARY OF THE INVENTION

Described herein is a method of making a food ingredient or product comprising reducing total organic acid content (TOAC) in the food ingredient by at least about 20 percent (preferably by at least about 50 percent and more preferably by at least about 70 percent), wherein the food Ingredient is not sour compared to a conventional food ingredient at a pH of 5 or less.

In one embodiment, the food ingredient or product is a dairy ingredient or product. In another embodiment, the food ingredient may be milk or cheese. In yet another embodiment, the food ingredient is cocoa. In one embodiment, the finished food product is any of dairy spread, chocolate milk food, and cheese sauce. In one embodiment, the food ingredient is incorporated into a finished food product. In one embodiment, the reduction of TOAC is accomplished by any of water extraction, solvent extraction, membrane separation, ion exchange, precipitation, centrifugation, and combinations thereof.

Also described herein is a method of making a finished food product comprising reducing TOAC in a food ingredient by at least about 20 percent (preferably by at least about 50 percent and more preferably by at least about 70 percent), and incorporating the food ingredient into a finished food product, wherein the finished food product has a TOAC of 0.2 mole or less per kilogram of the finished food product, and reducing the pH of the finished food product to the range of 5 and below, preferably to the range of 4.5 and blow, wherein the finished food product is shelf stable under ambient and/or refrigeration storage conditions and is not sour compared to a conventional finished food product at a similar pH.

### DETAILED DESCRIPTION OF THE INVENTION

Described herein are TOAC-reduced food ingredients and methods of making TOAC-reduced food ingredients having a less sour taste and better organoleptic properties than conventional food ingredients at low pH values. Conventional food ingredients and food products are those food ingredients and food products that have not been subjected to organic acid and/or organic salt reduction methods. Reduced sourness of the food ingredients of the present invention may be achieved by subjecting the food ingredients to organic acid/organic acid salt reduction methods.

There are numerous advantages to the present invention. The TOAC-reduced food ingredients produced by the methods described herein may be used in a variety of foodstuffs and particularly in low pH foodstuffs. An edible inorganic acid (e.g., food grade hydrochloric acid) may be used to lower the pH of the ingredient to facilitate the dissolution, and thus reduction or removal, of the salts of metal organic acids naturally present in the conventional ingredients. The final pH of TOAC-reduced food ingredients of the present invention can be further adjusted to any pH (2 to 11) with food grade inorganic acids (e.g., hydrochloric acid) or inorganic bases (e.g., sodium hydroxide) as appropriate and desired. The TOAC-reduced food ingredients of this invention may be further processed into various physical forms (e.g., liquid concentrates, dry powders, and the like) as needed for storage or transportation purposes. When compared to similar conventional food ingredients at the same pH, the food ingredients of the present invention taste less sour than the conventional food ingredients having higher TOAC. Because the TOAC-reduced food ingredients described herein are less sour than conventional food ingredients, they are more palatable than conventional food ingredients in low pH or acidified food products.

The inventive method may be applied to a wide variety of food ingredients. The inventive food ingredients may also be incorporated into food product achieving the same beneficial properties, such as increased shelf life by lowering product pH without increased sourness. For example, the methodology is useful for reducing sourness of cheese, milk, skim milk, whole milk, cheese curd, dairy spread, cocoa, cheese sauce, chocolate flavored milk food, vanilla flavored milk food, process cheese, and the like. However, the foregoing should not be considered an exhaustive list of the many food ingredients and food products that the methodology described herein may be applied to. In one example, a TOAC-reduced milk or dairy ingredient (e.g., whey powder) may be used in the production of a low pH, reduced sour cheese product. Advantageously, food products made from the food ingredients described herein retain the beneficial properties of the food ingredients. Thus, low pH food products made with the inventive food ingredients have a longer shelf life, yet do not have adverse organoleptic properties (such as sourness). The methods described herein are useful when applied to high moisture (generally containing at least about 20 percent moisture and/or having a water activity of about 0.85 or greater) food products.

Food ingredients can be made to taste significantly less sour at a low pH through effective reduction of TOAC by at least about 20 percent of the untreated food ingredient. In another embodiment, the TOAC may be reduced by at least about 50 percent. In another embodiment, the TOAC may be reduced by at least about 70 percent. The organic acid/salt reduced food ingredients may be used in the production of low pH foodstuffs without inducing sour off-taste in the finished low pH products. Generally, more than 0.2 mole organic acids per 1 kilogram of finished food product gives rise to an objectionable taste. Thus, it is desirable to reduce the total amount of organic acids to 0.2 mole per 1 kilogram (or lower) of finished food product. It should be understood that certain food ingredients on their own may not be reduced below 0.2 mole per 1 kilogram, but in combination the food ingredients should not exceed 0.2 mole per 1 kilogram in the finished food product. It should also be understood that organic acids in a finished may come from ingredients in which they occur naturally or from artificially added organic acid acidulants (e.g., vinegar, lactic acid, citric acid, and the like).

Although not wishing to be limited by theory, it is hypothesized that acids having a higher pKₐ and more protons are more sour at equal molar concentration and pH than acids having a lower pKₐ and fewer ionizable protons. Thus, those organic acids having a higher pKₐ and more ionizable protons will contribute disproportionately to a sour taste. Since most organic acids have a pKₐ of 2.0 to 5.0 and most low pH foods have a pH between 2.5 and 5.0, the TOAC is a good indication of perceived sourness in a low pH food product. The solubility of most metal salts of organic acids increases with decreasing pH, thus the pH condition and the specific method used to reduce TOAC may vary the efficiency of TOAC removal and, therefore, the total organic acids reduction that may be achieved. Of course, depending on the removal regime, similar results may be achieved regardless of which organic acid, or organic acids, are removed.

As is known by those of ordinary skill in the art, pH is a measure of the acidity of a solution in terms of activity of hydrogen. A neutral solution (i.e., a solution where the hydrogen ion activity equals hydroxide ion activity) has a pH of approximately 7. Aqueous solutions with pH values lower than 7 are considered acidic, while pH values higher than 7 are considered basic. Examples of acidic substances include lemon juice (pH of approximately 2.4), cola (pH of approximately 2.5), vinegar (pH of approximately 2.9), orange juice (pH of approximately 3.5), beer (pH of approximately 4.5), coffee (pH of approximately 5.0), and tea (pH of approximately 5.5). For the purposes of the description herein, low pH is any pH at 5 or below.

An organic acid is an organic compound with acidic properties. The most common organic acids are the carboxylic acids whose acidity is associated with their carboxyl group (-COOH). Other groups can also confer acidity, although usually weakly. Examples include the hydroxyl group (-OH), sulfhydryl group (-SH), enol group (an alkene with a hydroxyl group), and the phenol group (a phenyl ring with a hydroxyl group). Examples of organic acids include gluconic acid, lactic acid, acetic acid, sorbic acid, adipic acid, maleic acid, carbonic acid, fumaric acid, citric acid, formic acid, butyric acid, and benzoic acid. Salts of organic acids are the ionized form of the acid. Examples of salts of organic acids include gluconate, lactate, acetate, sorbate, adipate, succinate/malate, tartarate/carbonate, fumarate, oxalate, citrate, and formate. Due to its unusually high pKₐ, phosphoric acid can provide a significant contribution to the sour taste of low pH food products (generally about 2.5 to about 5 pH and particularly below about 4); thus, for purposes of this invention, phosphoric acid is considered as an organic acid within the context of TOAC reduction.

Total organic acid content in a food product can influence the perceived sourness intensity. The organic acids in a food mainly come from the added edible food acidulants including, but not limited to, acetic acid, adipic acid, citric acid, fumaric acid, gluconic acid, lactic acid, malic acid, and tartaric acid; as noted, phosphoric acid also contributes to the perceived sourness and, thus, for purposes of this invention, is considered an organic acid. Natural occurring organic acids in food ingredients will also contribute to perceived sourness. Thus, for purposes of this invention "total organic acid content" or TOAC is defined as the sum of all the above-mentioned food acidulants and all natural occurring organic acids (including those not mentioned above such as oxalic acid, succinic acid, ascorbic acid, chlorogenic acid, and the like), as well as the corresponding salts of such acids. An organic acid profile can be readily obtained using appropriate analytical methods (see e.g., Rantakokko et al., "Ion Chromatographic Method for the Determination of Selected Inorganic Anions and Organic Acids from Raw and Drinking Waters Using Suppressor Current Switching to Reduce The Background Noise," J. Liq. Chrom., 27, 821-842 (2004), which is hereby incorporated by reference). The quantity of individual organic acids can be measured and summed up to give "total organic acid content" which can be conveniently expressed in "moles per 1000 grams of finished foodstuff."

As is known by those of ordinary skill in the art, organic acids may also be present in the form of salts. Therefore, for the purposes of the description herein, reducing the amount of organicacids is synonymous with reducing the amount of the corresponding organic salts. Also for the purposes of the description herein, a reduction of an organic acid may be measured by quantifying the total amount of the organic acids, which includes those from free organic acids and organic acid salts, in a food ingredient or food product before and after treatment.

Reduction in total organic acid content of a food product may be achieved using any suitable method so long as the desired reduction can be obtained. Examples of methods useful for reducing organic acid content of an ingredient include, but are not limited to, water extraction, solvent extraction, membrane separation, ion exchange, precipitation, centrifugation, and combinations thereof.

Solvents useful for reducing total organic acid content of a food product may include, but are not limited to, water, pH-adjusted water (e.g., water containing food grade inorganic acids or bases, water in which the pH is adjusted by methods such as electrodialysis, and the like), aqueous solutions of edible salts (e.g., NaCl), food grade alcohol, and combinations thereof.

Membrane separation techniques include, but are not limited to, dialysis, ultrafiltration (UF), diafiltration (DF), microfiltration (MF), nano filtration (NF), and electrodialysis (ED), and the like.

Precipitation techniques include, but are not limited to, chemical precipitation, physical precipitation, and enzymatic precipitation.

For purposes of this invention, "shelf stable food products" is intended to mean that the preserved food products stored under ambient conditions are safe for consumption. And "refrigeration stable food products" is intended to mean the preserved food products stored under refrigeration conditions are safe for consumption. Typically, food compositions that are shelf stable under ambient storage condition are also refrigeration stable. In a particular aspect, shelf lives of shelf stable food products of this invention are at least about three months, preferably at least about six months, or even more at least about twelve months. In another aspect, shelf lives for refrigeration stable products are at least about one month, preferably at least about two months, even more preferably at least about three months, and most preferably at least about four months.

### EXAMPLES

A better understanding of the present embodiment and its many advantages may be clarified with the following examples, given by way of illustration. All percentages are by weight percent unless otherwise specified.

Example 1: Organic Acid Reduced Cheese Curd. A cheese curd having reduced organic acid content was prepared by washing (soaking) fresh cottage cheese curd at 5°C for 60 minutes with an equal amount (by weight) of deionized water pH adjusted to 3.0. The liquid was drained off leaving the curds. The curds were homogenized with a lab blender and pH adjusted to 4.0 with 6.25N HCl. An unwashed control curd was also homogenized with a lab blender and pH adjusted to 4.0 with 6.25N HCl.

The experimental curd and the control curd were analyzed for organic acid composition and sensory sourness at an equal pH of 4.0. The washed curd was significantly less sour than the control curd. The control curd was noticeably much more sour tasting. Organic acid analysis indicated that the washed curd had a significant reduction of lactate (76 percent), phosphate (62.5 percent), and citrate (75 percent) in comparison to the control curd. The results of the organic acid analysis are as follows:

**Organic Acid/Salt Profile of Cheese Curd Samples**

| | Control (percent) | Washed (percent) |
|---|---|---|
| Gluconate | <0.01 | <0.01 |
| Lactate | 0.25 | 0.06 |
| Acetate | <0.01 | <0.01 |
| Sorbate | <0.01 | <0.01 |
| Adipate | <0.01 | <0.01 |
| Succinate/Malate | <0.01 | <0.01 |
| Tartarate/Carbonate | <0.01 | <0.01 |
| Fumarate/Oxalate | <0.01 | <0.01 |
| Phosphate | 0.08 | 0.03 |
| Citrate | 0.08 | 0.02 |
| Formate | <0.01 | <0.01 |
| TOAC | 0.41 | 0.11 |

Thus, a 73 percent reduction in TQAC was obtained.

Example 2: Citrate and Phosphate Reduced Milk. Pasteurized cow milk was pH adjusted from 6.6 to 5.5 using food grade 5N HCl and then concentrated using UF and DF to about 3 times the original concentration. The filtered milk was then reconstituted back to the original concentration and adjusted to a pH of 4.0 using 5N HCl, Unfiltered control milk was also adjusted to a pH of 4.0 using 5N HCl.

The pH adjusted reconstituted filtered milk and unfiltered control milk were evaluated by three separate sensory panels with five to seven panelists on each panel. The organoleptic evaluation confirmed that the filtered milk did not taste sour whereas the unfiltered control milk was extremely sour. Both samples were subjected to organic acid analysis. Organic acid analysis indicated that the filtered milk had a significant reduction of lactate (at least 87.5 percent), acetate (approximately 75 percent), phosphate (approximately 91 percent), and citrate (approximately 96 percent) in comparison to the control. The results of the organic acid analysis are as follows:

**Organic Acid/Salt Profile of Milk Samples**

| | Starting 1X Milk (percent) | Reconstituted 1X Filtered Milk (percent) |
|---|---|---|
| Gluconate | <0.005 | <0.001 |
| Lactate | 0.008 | <0.001 |
| Acetate | 0.008 | 0.002 |
| Sorbate | <0.001 | <0.001 |
| Adipate | <0.005 | <0.001 |
| Succinate/Malate | <0.005 | <0.001 |
| Tartarate** | <0.005 | <0.001 |
| Fumarate | <0.005 | <0.001 |
| Phosphate | 0.090 | 0.008 |
| Citrate | 0.115 | 0.005 |
| TOAC | 0.221 | 0.015 |

Thus, a 93 percent reduction in TOAC was obtained.

Example 3: Washed, Organic Acid Reduced Cocoa. Commercial roasted cocoa nibs (D-type alkaline treated from Archer Daniels Midland Co., Cocoa Div., Milwaukee, WI) were mixed with 2 parts deionized water and pH adjusted to 3.0 with 6.25N and 0.1 N HCl. Part of the cocoa mixture was subjected to heat treatment for 5 minutes at 80°C. The remainder of the cocoa mixture was not subjected to any heat treatment. The samples were then equilibrated at 5°C for about 12 hours.
Next, the nibs were dried in a convective oven at 65°C. The heat treated, washed cocoa sample and the unheated, washed cocoa sample were ground, separately, into a powder in a small kitchen coffee grinder. A 5 percent aqueous dispersion of each of the heat treated, washed cocoa sample and the unheated, washed cocoa sample were pH adjusted to 4.0. A 5 percent aqueous dispersion of unwashed, unheated cocoa (the control) was also pH adjusted to 4.0.

All three samples were compared by taste experts for general taste profile and sourness intensity (based on a 5 point scale where 1 is the lowest sour intensity and 5 is the highest sour intensity). Both of the washed samples were determined to be significantly less sour than the unwashed control sample, where the washed samples had an intensity of 1-2 and the unwashed control sample had an intensity of 5 on the 5 point scale. All three samples were subjected to organic acid analysis.
Organic acid analysis indicated that both of the washed samples had a significant reduction of organic acids in comparison to the control sample. There was little difference between the washed, heat treated sample and the washed, unheated sample. The washed, unheated sample had a significant reduction of gluconate (approximately 23 percent), lactate (approximately 71 percent), acetate (approximately 73 percent), adipate (at least 50 percent), succinate/malate (approximately 71 percent), tartarate (approximately 50 percent), fumarate/oxalate (approximately 41 percent), phosphate (approximately 58 percent), citrate (approximately 72 percent), and formate (approximately 83 percent). The results of the organic acid analysis are as follows:

**Organic Acid/Salt Profile of Cocoa Samples**

| | Control (%) | Washed Without Heat Treatment (%) | Washed With Heat Treatment (%) |
|---|---|---|---|
| Gluconate | 0.13 | 0.03 | 0.03 |
| Lactate | 0.14 | 0.04 | 0.04 |
| Acetate | 0.37 | 0.10 | 0.10 |
| Sorbate | 0.01 | 0.01 | 0.01 |
| Adipate | 0.02 | < 0.01 | < 0.01 |
| Succinate/Malate | 0.07 | 0.02 | 0.02 |
| Tartarate/Carbonate | 0.02 | 0.01 | 0.01 |
| Fumarate/Oxalate | 0.39 | 0.23 | 0.26 |
| Phosphate | 0.12 | 0.05 | 0,06 |
| Citrate | 0.60 | 0.17 | 0,16 |
| Formate | 0.06 | 0.01 | 0.03 |
| TOAC | 1.87 | 0.67 | 0.72 |

The reduction in TOAC was about 61 and 64 percent, respectively, for the two cocoa samples.

Example 4: Dairy Spread. A shelf-stable dairy spread was prepared from the citrate and phosphate reduced milk from Example 2. 60 percent 3x UF/DF milk concentrate from Example 2, 0.2 percent salt, 20.2 percent water, 13 percent anhydrous milk fat, 5 percent sugar, 0.05 percent sorbic acid, 1.5 2.5N food grad HCl, and 0.0006 percent flavorings were mixed together to make a creamy milk spread. The anhydrous milk fat was first melted and mixed with the rest of the ingredient (except for flavorings) and homogenized at 3000/500 psi. Then, the homogenized mixture was pasteurized at about 185°F for 5 minutes. Flavorings were added 2 minutes before completing the pasteurization. The resulting spread was filled into a plastic container. The spread had a pH of 4.2. The spread met the requirements of a shelf stable product under ambient storage conditions for a period of at least 3 months.

The spread was evaluated by an expert sensory panel. The spread had a pleasant milky flavor and had no detectable sour off-taste. The dairy spread was successfully used as an intermediate component as a dairy based for other flavored spreads (e.g., strawberry, chocolate) and non-spread products.

Example 5: Chocolate Milk Food. A shelf stable, low pH (4.2), non-sour chocolate milk food was prepared from the dairy spread from Example 4. 80 percent of the dairy base from Example 4, 6.5 percent water, 0.28 percent gums, 11 percent sugar, 1.5 percent commercial cocoa (D-11-S from Archer Daniels Midland Co., Cocoa Div., Milwaukee, WI), 0.6 percent 2.5 N HCl, and 0.1 percent flavorings were mixed together to make the chocolate milk food. After mixing, the composition was pasteurized at 185°F for 5 minutes. Flavorings were added 2 minutes before completing the pasteurization. The chocolate milk food was used as a spread and shaped into various shapes (bits and slices) as a milk snack. The chocolate milk food had a pH of 4.2. The spread met the requirements of a shelf stable product under ambient storage conditions for at least about 3 months.

The chocolate milk food was evaluated by a six person expert sensory panel. The milk chocolate product had normal chocolate milk flavor/taste profile and was not sour in taste.

Example 6: Cheese Sauce. A shelf stable, low pH cheese sauce with normal protein content was made using the citrate and phosphate reduced milk concentrate from Example 2. 30 percent of the 3x UF/DF milk concentrate from Example 2, 2 percent salt, 31.17 percent water, 15 percent anhydrous milk fat, 13 percent corn syrup solid (maltodextrin), 4 percent cheese powder, 0.05 percent sorbic acid, 0.08 percent gum, 2 percent 2.5N food grade HCl, 0.12 percent annatto and oleoresin paprika, 0.5 percent emulsifier, 1.5 percent starch, and 0.58 percent flavorings were mixed together. The anhydrous milk fat was pre-melted. Starch slurry was pre-formed with 1 part starch to 3 parts water. All ingredients were mixed (except for HCl, flavorings, and starch slurry) and homogenized at 2000/500 psi.
The starch slurry was then added to the mixture. Then, the mixture was pH adjusted to 4.2 with HCl and pasteurized at 185°F for 3 minutes. Flavorings were added towards the end of pasteurization. The end product was a shelf stable, low pH (4.2) cheese sauce. The cheese sauce met the requirements of a shelf stable product under ambient storage conditions for at least about 3 months.

The cheese sauce was evaluated by a six person expert sensory panel. The cheese sauce had excellent flavor, texture, was not sour, and exhibited the taste profile of a regular cheese sauce.

Example 7: Acidified Cheese. An acidified cheese was made using the citrate and phosphate reduced UF/DF milk from Example 2. Citrate and phosphate reduced UF/DF concentrated milk from Example 2 (90 percent), water (9.95 percent), and 45 percent (w/v) calcium chloride solution (0.05 percent) were mixed together and kept at refrigeration temperature. 2.5N HCl percent (2.2 percent by weight of the mixture) was quickly mixed into the composition. Approximately 0.01 percent Chymax solution was added after the acidification step. The composition was incubated at 90°F for 40 minutes. Then, the curds were cut and were incubated at 110°F for 60 minutes. The curds were then drained on cheesecloth and pressed to extract excess whey and salted (2 percent by weight of the curds). The end product was an acidified cheese (pH 4.6) that may be used in processed cheese, cheese sauce, or other food products.

Example 8: Citrate and Phosphate Reduced Skim Milk. Pasteurized skim milk was adjusted to a pH of 5.5 from a pH of 6.8 using a food grade 5N HCl. Next, the skim milk was filtered and concentrated using UF and DF to about 4 time of the original concentration. The resulting milk was then reconstituted with deionized water to achieve approximately the same protein concentration of regular skim milk. Part of the reconstituted milk was acidified with citric acid to a pH of 4.0. The other part of the reconstituted milk was acidified with HCl to a pH of 4.0. A control sample of skim milk was also acidified with HCl to a pH of 4.0.

All three samples were evaluated by a sensory panel consisting of 20 tasters. All of the tasters (20/20) concluded that the reconstituted skim milk treated acidified with citric acid was more sour than the reconstituted skim milk acidified with HCl. Eighty percent of the tasters (16/20) determined that the reconstituted skim milk treated with HCl was less sour than the control sample. As indicated in the data below, the reconstituted skim milk acidified with citric acid had the highest total organic acids and the reconstituted milk acidified with HCI had the lowest total organic acids. The UF/DF treatment effectively reduced the TOAC by about 82% when comparing the regular skim milk acidified with HCl and reconstituted treated skim milk acidified with HCl.

**Organic Acid/Salt Profile of Acidified Skim Milk**

| | Skim Milk Acidified with HCl (%) | Reconstituted Skim Milk Acidified with Citric Acid (%) | Reconstituted Skim Milk Acidified with HCl (%) |
|---|---|---|---|
| Gluconate | < 0.005 | <0.001 | <0.001 |
| Lactate | < 0.005 | <0.001 | <0.001 |
| Acetate | < 0.005 | <0.001 | <0.001 |
| Sorbate | < 0.005 | <0.001 | <0.001 |
| Adipate | < 0.005 | <0.001 | <0.001 |
| Succinate/Malate | < 0.005 | <0.001 | <0.001 |
| Tartarate | < 0.005 | <0.001 | <0.001 |
| Fumarate | < 0.005 | <0.001 | <0.001 |
| Phosphate | 0.176 | 0.039 | 0.039 |
| Citrate | 0.166 | 0.351 | 0.023 |
| TOAC | 0.342 | 0.390 | 0.062 |

## Claims

1. A method of making a non-sour food ingredient comprising:
providing a food ingredient; and
treating the food ingredient to reduce total organic acid content by at least 20 percent to form the non-sour food ingredient;
wherein the non-sour food ingredient is not sour compared to the food ingredient at a pH of 5 or less.

2. The method of Claim 1, wherein the food ingredient is incorporated into a finished food product.

3. A method of making a finished food product comprising:
(1) providing a food ingredient;
(2) treating the food ingredient to reduce total organic acid content by at least 20 percent to form a non-sour food ingredient;
(3) reducing the pH of the finished food product to the range of 5 and below,
wherein the finished food product has total organic acid content of 0.2 mole per kilogram or less, wherein the finished food product is shelf stable under ambient or refrigeration conditions, and wherein the finished food product is not sour compared to a similar finished food product prepared using the food ingredient of step (1).

4. The method of Claim 3, wherein the finished food product is any of the group consisting of dairy spread, dairy snack, dairy dessert, chocolate milk food, cheese, and cheese sauce.

5. The method of any one of Claims 1 to 4, wherein the food ingredient is a dairy product.

6. The method of Claim 5, wherein the dairy food ingredient is any of the group consisting of milk, whey, and cheese.

7. The method of any one of Claims 1 to 3, wherein the food ingredient is cocoa.

8. The method of any one of Claims 1 to 7, wherein the treatment to reduce the total organic acid contact is any of the group consisting of water extraction, solvent extraction, membrane separation, ion exchange, precipitation, and centrifugation.
